(19) Europäisches Patentamt
European Patent Office
Office européen des brevets

(11) Numéro de publication : **0 460 994 B1**

(12) # FASCICULE DE BREVET EUROPEEN

(45) Date de publication du fascicule du brevet : **15.03.95 Bulletin 95/11**

(51) Int. Cl.$^6$ : **G01P 15/03**

(21) Numéro de dépôt : **91401363.6**

(22) Date de dépôt : **28.05.91**

(54) **Procédé et dispositif de mise en évidence d'un ou de choc(s) recu(s) par un substrat.**

(30) Priorité : **06.06.90 FR 9006989**
**22.11.90 FR 9014570**

(43) Date de publication de la demande : **11.12.91 Bulletin 91/50**

(45) Mention de la délivrance du brevet : **15.03.95 Bulletin 95/11**

(84) Etats contractants désignés : **BE DE ES GB IT LU NL SE**

(56) Documents cités :
**GB-A- 310 496**
**PATENT ABSTRACTS OF JAPAN vol. 13, no. 82 (P-833)23 Février 1989 & JP-A-63 266 357 (HITACHI LTD ) 2 Novembre 1988**
**PATENT ABSTRACTS OF JAPAN vol. 12, no. 164 (M-698)18 Mai 1988 & JP-A-62 280 082 (CANON INC ) 4 Décembre 1987**
**PHYSICAL REVIEW vol. 31, no. 2, 15 Janvier 1985, NEW YORK, US pages 942 - 946; HARRIS: 'Photoluminescence determination of the pressure and temperature of the shock wave induced by a pS laser pulse in a layered GaSe '**

(73) Titulaire : **HUTCHINSON S.A. une Société Anonyme dotée d'un Conseil de Surveillance et d'un Directoire**
**2, rue Balzac**
**F-75008 Paris (FR)**

(72) Inventeur : **Argy, Gilles**
**15ter, rue Nationale**
**F-78940 La Queue Les Yveline (FR)**
Inventeur : **Cheymol, André**
**15, route de Descartes**
**F-86220 Dange-St-Romain (FR)**
Inventeur : **Hervet, Hubert**
**4, Allée Paul Eluard**
**F-92290 Chatenay Malabry (FR)**

(74) Mandataire : **Orès, Bernard et al**
**Cabinet ORES**
**6, Avenue de Messine**
**F-75008 Paris (FR)**

EP 0 460 994 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention a pour objet un procédé et un dispositif de mise en évidence d'un ou de chocs reçus par un substrat.

On souhaite disposer, dans de nombreux domaines de l'industrie, d'un moyen permettant de rendre perceptibles, -alors qu'ils ne le seraient pas autrement- , un ou des chocs reçus par un substrat ou une structure. Ceci est le cas, par exemple, pour des substrats ou des structures en métal ou en matériau composite soumis à des chocs ne provoquant pas d'effet visible à l'oeil nu mais, notamment dans le cas de matériaux composites, susceptibles d'entraîner des amorces de rupture suivies ultérieurement d'une détérioration du matériau et, par suite, de la structure avec des conséquences très dommageables auxquelles il importe de pouvoir remédier dès qu'elles se sont produites. Il en est ainsi, entre autres, dans le domaine de l'aviation où l'invention trouve une application particulièrement intéressante sans qu'aucun caractère limitatif ne soit cependant associé à cette indication.

On souhaite également, dans certains cas, disposer d'un moyen permettant de rendre perceptible l'intensité du ou des chocs reçus par le substrat ou la structure.

On connaît, par le document Patent Abstracts of Japan, Vol.12, n° 164 (M-698) & JP-A-62280082, un milieu d'enregistrement d'informations optiques comprenant des microcapsules sensibles à la pression qui contiennent une substance fluorescente et qui sont réalisées en une matière masquant la fluorescence de cette substance. La rupture des microcapsules par un faisceau laser libère la substance fluorescente le long du trajet irradié par le faisceau laser et permet la détection optique de ce trajet.

Cette technique connue n'est pas satisfaisante dans la mesure où la fluorescence de la substance n'est masquée que par la matière de la coque des microcapsules. Si l'épaisseur de cette matière est faible, la fluorescence filtre à travers les microcapsules et est détectable. Si l'épaisseur est importante, les microcapsules deviennent moins sensibles à la pression et ne peuvent plus être brisées.

C'est un but général de l'invention de fournir un procédé et un dispositif qui permettent de mettre en évidence un ou des chocs reçus par un substrat, en évitant les inconvénients de la technique connue.

C'est, également, un but de l'invention de fournir un procédé et un dispositif qui permettent de mettre en évidence l'intensité du ou des chocs reçus par un substrat.

C'est, aussi, un but de l'invention de fournir un tel procédé et un tel dispositif qui soient d'une grande fiabilité et qui ne modifient pas, ou de manière extrêmement faible, l'aspect, le poids et les propriétés du substrat ou de la structure à surveiller.

C'est, encore, un but de l'invention de fournir un tel procédé et un dispositif pour sa mise en oeuvre qui, tout en étant d'une grande précision et fiabilité, ne traduisent pas les résultats du ou des chocs reçus par le substrat de façon immédiatement perceptible à l'oeil, mais nécessitent l'utilisation d'un moyen de détection pour sa visualisation et cela pour des raisons de confidentialité, de sécurité, ou analogue.

L'invention propose à cet effet un procédé de mise en évidence d'un ou de chocs reçus par un substrat ou une structure, au moyen d'une matière déposée sur le substrat ou la structure et comprenant une matrice dans laquelle sont incluses des microcapsules prévues pour être brisées lors d'un choc et libérer un ou des produits photoluminescents, caractérisé en ce qu'il consiste à associer dans les microcapsules ces produits à un solvant pour former un mélange ayant une photoluminescence faible ou quasi-nulle, la photoluminescence desdits produits apparaissant lorsque les microcapsules sont brisées et que le solvant est libéré et dispersé ou évaporé dans la matrice.

Dans un mode d'exécution préféré de l'invention, la photoluminescence est une fluorescence.

Dans ce dernier cas, l'invention prévoit dans une première réalisation de faire application du phénomène physique connu sous le nom d'"extinction dynamique intra-moléculaire bloquée en phase solide", et met alors en oeuvre des produits connus sous le nom de "rotateurs libres", c'est-à-dire des produits qui ont une fluorescence très faible ou pratiquement nulle lorsqu'ils sont en solution liquide, alors que le rendement de fluorescence devient très important lorsque lesdits produits sont "piégés" dans une matrice solide où les mouvements de rotation des molécules qui les constituent sont fortement gênés.

Dans une autre forme de réalisation, constituant une variante de celle exposée ci-dessus, les substances mises en oeuvre sont des molécules du type de celles susceptibles de subir un transfert de charge par torsion intra-moléculaire.

Dans un autre mode de réalisation, l'invention fait application du phénomène d'inhibition "dynamique" de la fluorescence de certaines substances c'est-à-dire du phénomène par lequel le rendement de fluorescence des molécules constitutives de ces substances est inhibé par des agents dits "inhibiteurs de fluorescence" qui jouent pleinement leur rôle aussi longtemps qu'ils sont présents en solution liquide avec les substances fluorescentes dans les microcapsules noyées dans la matrice alors que cette action d'inhibition n'existe plus, ou à un degré notablement moindre, après rupture des microcapsules lors de la diffusion desdits agents dans

la matrice où ils s'évaporent avec le solvant ou bien sont "piégés".

Quel que soit le mode de réalisation, l'invention prévoit avantageusement de noyer les microcapsules sensibles au choc dans une matrice à base de polymère(s), du type d'un vernis mono-composant à séchage par évaporation ou d'un vernis bi-composants à polymérisation et/ou réticulation, transparent au rayonnement d'excitation et au rayonnement de photoluminescence réémis.

La dureté et la fragilité de l'enveloppe des microcapsules sont, bien entendu, choisies en fonction des desiderata de la pratique, d'une part, (résistance à un ou des chocs d'intensité et de caractéristiques données) mais aussi, d'autre part, en fonction des caractéristiques physiques ou chimiques des substances propres à fournir un rayonnement de photoluminescence et de la matrice qui enferme lesdites microcapsules.

Ainsi, dans une réalisation faisant application de "rotateurs libres", le produit, dont les molécules organiques appropriées constituent lesdits "rotateurs", est mis en solution dans un solvant capable de dissoudre lesdites molécules, bien entendu inerte vis-à-vis de l'enveloppe de la microcapsule et présentant une forte tension de vapeur pour une évaporation rapide dans la matrice dans laquelle il doit pouvoir migrer facilement, avantageusement par dissolution du ou des matériaux constitutifs de cette dernière.

Parmi les produits susceptibles d'être utilisés en tant que "rotateurs libres" de bons résultats ont été obtenus avec les di et triphénylméthane comme la tétraméthyldiaminodiphénylkétone (Michler's cetone), la tétraméthyldiaminophénylkéthoimine hypochloride, (dite auramine O), l'acide fuschin, le crystal-violet, l'éthyl violet, le malachite green, le victoria blue, le patent blue, l'éthyl green, le wool green.

De bons résultats ont également été obtenus à partir des dérivés du stylbène et, notamment, le cis-stilbène, le trans-$\alpha$-méthylstilbène, le trans-$\alpha$-$\alpha'$-diméthylstilbène, le trans-2,4,6-triméthylstilbène, le triphényléthylène, le tétraphényléthylène.

Des résultats satisfaisants ont également été obtenus en utilisant en tant que "rotateurs libres" des malonitriles.

Pour la mise en solution de ces molécules organiques, l'invention prévoit de faire application de solvants chlorés comme le chloroforme, le tétrachlorure de carbone, le trichloréthylène ou le dichloréthane, mais aussi de solvants comme le xylène ou le cyclohexane ou d'autres solvants non toxiques, ni inflammables.

Etant donné, comme indiqué ci-dessus, qu'après rupture des microcapsules sous l'influence d'un choc le solvant doit pouvoir migrer dans la matrice, le choix du solvant dépend bien entendu de la nature de la matrice dans laquelle il doit diffuser et de bons résultats ont également été obtenus en faisant appel, pour ces solvants, à des alcools, des acétones ou des acétates.

La matrice elle-même est avantageusement un médium du type peinture ou vernis à base de résines polyuréthannes mono ou bi-composants, de résines époxy, acryliques, styréniques ou glycérophtaliques renfermant les microcapsules dont les coques ou enveloppes sont de préférence réalisées à partir de matières plastiques du type des polyamides.

Dans les modes de réalisation faisant application d'une inhibition "dynamique", c'est-à-dire d'un processus de désexcitation de molécules fluorescentes par des chocs contre des molécules inhibitrices qui diffusent dans un solvant, les microcapsules renferment un système à trois composants, à savoir un fluoresceur, un inhibiteur et le solvant proprement dit.

De bons résultats ont été obtenus, dans ces modes de réalisations, avec les systèmes suivants :

| Fluoresceur | inhibiteur | Solvant |
|---|---|---|
| Pérylène | CBr4 | Benzène |
| " | " | Decaline |
| Rubrène | " | Benzène |
| " | " | Cyclohexane |
| 1,2-benzanthracène | " | Huile minérale |
| Anthracène | CNSe-K+ | Méthanol |
| Anthracène | I-K+ | " |

ou avec les systèmes suivants :

| | | |
|---|---|---|
| Pyrène | N.N.diméthylaniline | Acétonitrile |
| " | " | Diméthylformamide |
| " | " | Ethanol |
| Pyrène | Tétracyanobenzène | Acétonitrile |
| " | " | n-hexane |
| Pyrène | o-dicyanobenzène | Acétonitrile |
| " | p-dicyanobenzène | " |
| " | m-dicyanobenzène | Méthanol |
| " | α-cyanonaphtalène | " |
| " | m-dicyanobenzène | Micelle |
| Méthylpyrène | " | Micelle |
| Pérylène | N.N-diméthylamine | Acétone |
| Diéthylindolindole | p-cyanotoluène | Micelle |
| " | α-cyanonaphtalène | Micelle |
| $Ru(bpy)_3^{2+}$ | 1-naphtylamine | Acétonitrile |
| $Ru(bpy)_3^{2+}$ | " | Propionitrile |
| " | " | Acétone |
| " | " | Méthanol |
| " | " | Ethanol |
| " | " | 2-propanol |

| | | |
|---|---|---|
| " | N,N,N',N'-tétraméthyl-p phénylènediamine | Acétonitrile |
| " | 4-aminodiphénylamine | " |
| $Ru(bpy)_3^{2+}$ | Phénothiazine | Acétonitrile |
| " | N,N-diméthylaniline | " |
| " | Duroquinone | " |
| " | N,N,N',N'-tétraméthyl-1,4-benzènediamine | " |
| " | N,N,4-triméthylbenzène-diamine | " |
| " | N,N-diméthylaniline | Méthanol |
| " | N,N-diméthyl-p-toluidine | " |
| " | N,N,N',N'-tétraméthyl-p-phénylènediamine | " |

Dans l'un de ses modes d'exécution, le procédé selon l'invention consiste alors à appliquer sur la surface du substrat ou structure un film ou pellicule d'une matrice du type vernis ou peinture dans laquelle sont noyées les microcapsules renfermant le ou les produits à propriété de photoluminescence, puis à provoquer le séchage ou la réticulation de la matrice, ces opérations étant suivies ultérieurement pour la mise en évidence d'un ou de chocs éventuels d'une excitation photoluminescente du film ou pellicule provoquant une réémission photoluminescente en correspondance de celles des microcapsules brisées.

Lorsque l'on souhaite, complémentairement, mettre en évidence l'intensité du ou des chocs reçus par le substrat, le procédé selon l'invention est caractérisé par l'utilisation de microcapsules à coques de fragilités différentes qui enferment des produits lesquels, lorsqu'ils sont libérés dans la matrice, ont des caractéristiques optiques différentes.

Dans un mode d'exécution préféré d'un tel procédé, suivant lequel la photoluminescence est une fluorescence, l'invention prévoit de faire application en tant que produits enfermés dans les microcapsules de molécules organiques dont les caractéristiques optiques diffèrent entre elles par les spectres d'absorption, ou d'émission, ou d'absorption et d'émission.

Dans une forme de réalisation, les molécules organiques mises en oeuvre sont des dérivés du stilbène et, plus précisément, le trans-α-α'-dichlorostilbène et le trans-α-α'-diméthylstilbène, de formules respectives :

[1] 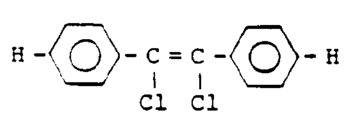

[2] 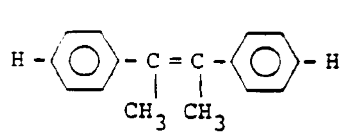

qui diffèrent entre eux par leurs spectres d'émission et d'absorption.

Pour mettre en évidence différentes intensités d'un ou de chocs reçus par un substrat, on éclaire alors ce dernier avec une lumière de longueur d'onde $\lambda_1$ et on observe le rayonnement émis à une longueur d'onde $\lambda_2$, ce qui révèle la présence du composé [1], tandis que l'éclairage du substrat par un rayonnement de longueur d'onde $\lambda_3$ et l'observation à une longueur d'onde $\lambda_4$ permet de détecter la présence du composé [2].

Dans une variante de réalisation, les molécules organiques mises en oeuvre appartiennent à la famille du cis-stilbène.

Dans une autre forme de réalisation, les molécules organiques mises en oeuvre sont le cis-4-4′-diméthylstilbène, d'une part, et une molécule de la famille des malonitriles, comme le p-diméthylaminobenzylidènemalonitrile, d'autre part.

Ces composés, de formules respectives :

[3] 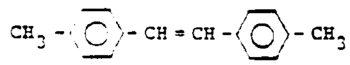

[4] 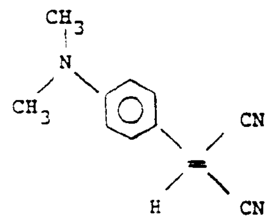

permettent de mettre en évidence des chocs d'intensités différentes reçus par le substrat lorsque ce dernier est éclairé à une longueur d'onde $\lambda_5$ et observé à une longueur d'onde $\lambda_6$ , pour sélectionner la fluorescence émise par le composé [3], tandis que l'éclairage du substrat à une longueur d'onde $\lambda_7$ et son observation à une longueur d'onde $\lambda_8$ permet de sélectionner la fluorescence émise par le composé [4].

Dans une variante de réalisation, l'invention prévoit de mettre en oeuvre du triphényléthylène en lieu et place du cis-4-4′-diméthylstilbène.

Quel que soit le mode de réalisation, les microcapsules dont les coques sont sensibles à des chocs d'intensités différentes sont noyées dans une matrice à base de polymère(s) du type d'un vernis mono-composant à séchage par évaporation ou d'un vernis bi-composants à polymérisation et/ou réticulation, transparent au rayonnement d'excitation et au rayonnement de photoluminescence réémis.

Dans l'un de ses modes d'exécution, le procédé selon l'invention consiste alors à appliquer sur la surface du substrat ou structure un film ou pellicule d'une matrice du type vernis ou peinture dans laquelle sont noyées les microcapsules renfermant le ou les produits à propriétés de photoluminescence différentes, puis à provoquer le séchage ou la réticulation de la matrice, ces opérations étant suivies ultérieurement pour la mise en évidence d'un ou de chocs éventuels d'un éclairage du film ou pellicule par un rayonnement de longueur d'onde donnée pour provoquer une réémission photoluminescente en correspondance de celles des microcapsules brisées, réémission photoluminescente qui est elle-même observée à une longueur d'onde donnée, généralement différente de celle d'excitation.

D'autres caractéristiques et avantages de l'invention apparaîtront de la description qui suit, d'exemples de réalisations, description faite en référence au dessin annexé dans lequel les figures 1 à 3 sont des schémas explicatifs.

## I. DISPOSITIF A "ROTATEURS LIBRES"

Pour la réalisation d'un dispositif selon l'invention destiné à permettre la mise en évidence d'un ou de chocs reçus par un substrat ou structure on fabrique tout d'abord un milieu du type peinture ou vernis susceptible d'être appliqué sous forme d'un film ou pellicule sur ledit substrat ou structure et qui est constitué par une matrice, dans laquelle sont noyées des microcapsules renfermant lesdites molécules de "rotateurs libres" et leur solvant.

### I.1. Préparation des microcapsules

Celles-ci sont constituées par une coque ou enveloppe de forme générale sphérique, d'une dimension moyenne de 20 à 40 m enfermant, en tant que substance dont les molécules organiques se comportent comme des "rotateurs libres", du triphényléthylène dans un solvant constitué par du xylène.

Pour réaliser les microcapsules, on dissout 8 mg de triphényléthylène dans 80g de xylène. On ajoute cette solution dans une solution à pH 3,5 composée de :

0,5 g de résorcinol,
5 g d'urée,

250 g d'eau à 1,25 % de PVA (8188).

Lorsque les gouttelettes de l'émulsion ainsi préparée ont la taille désirée de 20 à 40 µm, la température est ajustée à 40°C et on ajoute 40 ml d'une solution à 37 % de formaldéhyde. L'agitation est maintenue 15 heures, puis les microcapsules sont lavées et filtrées. Elles sont ensuite séchées dans un courant d'air à faible température, de 20 à 30°C.

I.2. Préparation de la matrice

Elle est choisie pour pouvoir former un film ou pellicule mince sur le substrat ou structure à étudier, de façon à ne pas modifier ou à ne modifier que de manière extrêmement faible l'aspect, le poids et les propriétés dudit substrat ou structure.

Choisie pour laisser passer le rayonnement d'excitation et le rayonnement réémis par les "rotateurs libres" lorsque ceux-ci ne sont plus enfermés dans leurs microcapsules, elle est constituée, dans l'exemple décrit, par une résine époxy dont la réticulation est obtenue à l'aide de peroxyde.

Pour la préparation du vernis destiné à former le film ou pellicule, les microcapsules sont ensuite introduites par agitation lente (une heure environ et à température faible de 20 à 25°C) dans la partie résine du mélange bi-composants à réticulation par peroxyde, ici une résine CELOMER (UNE MARQUE DÉPOSÉE DE LA SOCIÉTÉ "CELOMER"), type 7 020.

Pour la mise en oeuvre du vernis, la résine est rapportée, après mélange avec le composant de réticulation, sur la structure ou substrat à étudier, par exemple un modèle d'aile d'avion ou de pale d'hélicoptère.

Lorsqu'une telle structure est éclairée par un rayonnement d'excitation, aucune fluorescence ne peut être décelée en raison de la valeur extrêmement faible du rendement de fluorescence des "rotateurs libres" enfermés en phase liquide dans les microcapsules où, -sans que la Demanderesse ne soit liée par cette explication-, les possibilités offertes aux molécules de tourner rapidement les unes par rapport aux autres en un temps beaucoup plus court que la durée de vie intrinsèque de l'état excité provoque une désexcitation sans émission de rayonnement desdites molécules. Lorsque, par contre, la même structure est excitée après qu'un choc se soit produit, qui a brisé la coque de certaines microcapsules avec, pour résultat, la diffusion de la phase liquide dans la matrice et l'évaporation du solvant, les molécules de "rotateurs libres" très peu volatiles retrouvent leur rendement de fluorescence normal engendrant un rayonnement de longueur d'onde caractéristique qui traduit, pendant une durée qui peut être de l'ordre de quelques heures à quelques jours ou davantage le ou les choc(s) ayant provoqué la rupture desdites microcapsules.

II. DISPOSITIF A INHIBITION DYNAMIQUE

II.1. Préparation des microcapsules

On dissout 2,4 mg de naphtacène (fluoresceur) et 16 g de tétrabromure de carbone ($CBr_4$ jouant le rôle d'inhibiteur) dans 40 g de cyclohexane. La solution est mise en émulsion dans une solution aqueuse dont la composition est :

26 g de résine urée/formol,
0,06 g de HCl à 12,5 %,
160 g d'eau.

En opérant à température ambiante on ajoute après 5 minutes, 30 minutes et 60 minutes d'émulsification 0,02 g d'une solution à 2,5 % de HCl.

Après 15 heures d'agitation à 40°C la solution est neutralisée avec de la soude.

On lave et on filtre alors les microcapsules qui sont ensuite séchées dans un courant d'air tiède à 40°C.

II.2. Préparation de la matrice

Les microcapsules préparées comme indiqué ci-dessus sont ensuite introduites dans un vernis polyuréthanne monocomposant, comme celui connu sous la dénomination CELOMER (une marque déposée de la Société CELOMER) à raison de 1 % en poids.

Pour la mise en oeuvre du vernis celui-ci est rapporté par les méthodes usuelles sous forme d'un film sur une structure ou substrat à étudier après que ce dernier ait été revêtu d'un primaire type PA66 "CELOMER" (une marque déposée de la Société CELOMER).

Lorsque la structure est éclairée par un rayonnement d'excitation aucune fluorescence n'est décelée en raison de la présence dans chaque microcapsule d'un inhibiteur de fluorescence associé au naphtacène. Lorsque, par contre, la même structure est excitée après qu'un choc se soit produit qui a brisé la coque de certaines

microcapsules en libérant le tétrabromure de carbone qui s'évapore le naphtacène non inhibé retrouve son rendement de fluorescence normal engendrant un rayonnement de longueur d'onde caractéristique qui traduit le ou les choc(s) ayant provoqué la rupture des microcapsules.

III. DISPOSITIF PERMETTANT DE RENDRE PERCEPTIBLE L'INTENSITE D'UN OU DE CHOC(S)

Pour rendre perceptible, -alors qu'elle ne le serait pas autrement-, l'intensité d'un ou de choc(s) reçu(s) par un substrat ou structure, on fabrique tout d'abord un milieu du type peinture ou vernis susceptible d'être appliqué sous forme d'un film ou pellicule sur ledit substrat ou structure et qui est constitué par une matrice, dans laquelle sont noyées des microcapsules à coques de fragilités différentes renfermant des molécules ayant des caractéristiques optiques différentes, d'une part et douées de propriétés de photoluminescence différentes suivant qu'elles sont encapsulées ou libérées dans la matrice, d'autre part.

Lorsque le phénomène de photoluminescence dont on tire parti est une fluorescence, l'invention propose de faire appel à des molécules à spectres d'émission et/ou d'absorption différents. Cependant, étant donné que ces spectres sont relativement larges, -comme montré sur la figure 1 où la courbe en trait plein est représentative d'un spectre d'absorption et la courbe en tirets d'un spectre d'émission de fluorescence-, le procédé est mis en oeuvre en utilisant soit des molécules qui émettent dans la même bande spectrale, mais avec des maxima d'absorption différents (auquel cas c'est l'excitation qui est filtrée), soit des molécules qui ont des spectres d'absorption identiques mais des spectres d'émission décalés (auquel cas on filtre l'émission), soit encore en faisant application de molécules ayant des spectres d'émission et d'absorption différents, auquel cas c'est à la fois l'émission et/ou d'absorption qui sont filtrées.

Dans un premier mode de réalisation, les molécules organiques mises en oeuvre sont des dérivés du stilbène et, plus précisément, le trans-α-α′-dichlorostilbène et le trans-α-α′-diméthylstilbène dont les spectres d'absorption et d'émission, respectivement, sont tracés schématiquement sur la figure 2 qui montre à sa partie supérieure les spectres du trans-α-α′-dichlorostilbène et à sa partie inférieure ceux du trans-α-α′-diméthylstilbène.

Dans une variante de réalisation, les molécules mises en oeuvre sont des dérivés du cis-stilbène.

Dans une autre forme de réalisation, les molécules organiques mises en oeuvre sont le cis-4-4′-diméthylstilbène d'une part et le p-diméthylaminobenzylidènemalonitrile, dont les spectres d'absorption et d'émission sont illustrés sur la figure 3 où les courbes de la partie supérieure sont relatives au cis-4-4′-diméthylstilbène et celles de la partie inférieure au p-diméthylaminobenzylidènemalonitrile.

En variante, le cis-4-4′-diméthylstilbène est remplacé par du triphényléthylène.

Pour la réalisation d'un dispositif selon l'invention, on prépare d'abord des microcapsules de fragilités différentes, puis une matrice dans laquelle sont noyées lesdites microcapsules, l'ensemble étant ensuite rapporté sur le substrat, comme explicité ci-après.

A. Préparation des microcapsules

Celles-ci sont constituées de deux familles de coques ou enveloppes de forme générale sphérique, d'une dimension moyenne de 20 à 40 μm enfermant les molécules organiques précisées ci-avant.

Les coques ou enveloppes, dont la fragilité aux chocs diffère entre elles, sont réalisées à partir d'une solution de résorcinol, d'urée et d'eau à 1,25 % de PVA à laquelle on ajoute ultérieurement une solution de formaldéhyde.

Par un ajustement du temps d'agitation des gouttelettes d'émulsion formées par la solution avec les molécules organiques utilisées, d'une part, et par un ajustement de la température de réaction, d'autre part, on règle l'épaisseur des coques ou enveloppes fabriquées et ainsi leurs fragilités différentes aux chocs.

B. Préparation de la matrice

Choisie pour pouvoir former un film ou pellicule mince sur le substrat ou structure à étudier, de façon à ne pas modifier ou à ne modifier que de manière extrêmement faible l'aspect, le poids et les propriétés dudit substrat ou structure, mais aussi pour laisser passer le rayonnement d'excitation et le rayonnement réémis par les molécules organiques lorsque celles-ci ne sont plus enfermées dans leurs microcapsules, elle est constituée, dans l'exemple décrit, par une résine époxy dont la réticulation est obtenue à l'aide de peroxyde.

C. Préparation du vernis

Le vernis, qui est destiné à former le film ou pellicule, est obtenu en introduisant par agitation lente (1 heure

environ et à température faible, de l'ordre de 20 à 25°C) les microcapsules dans la partie résine du mélange bi-composants à réticulation par époxyde, par exemple ici une résine CELOMER, type 7020.

Pour la mise en oeuvre du vernis, la résine est rapportée, après mélange avec le composant de réticulation, sur la structure ou substrat à étudier, par exemple un modèle d'aile d'avion ou de pale d'hélicoptère.

Lorsqu'une telle structure est éclairée par un rayonnement d'excitation de longueur d'onde prédéterminée, d'une part, et est observée à une autre longueur d'onde prédéterminée, d'autre part, c'est l'un ou l'autre des composés d'abord enfermé dans les microcapsules, puis libéré dans la matrice en cas de choc(s) qui est mis en évidence, traduisant ainsi, en fonction de la fragilité de chacune des coques enfermant le composé correspondant, l'intensité du ou des choc(s) reçu(s) par le substrat.

Ainsi, lorsque le couple de molécules mis en oeuvre est formé par les composés [1] et [2], c'est-à-dire le trans-$\alpha$-$\alpha'$-dichlorostilbène et le trans-$\alpha$-$\alpha'$-diméthylstilbène, l'éclairage du substrat avec une lumière de longueur d'onde de 300 nm et l'observation de ce substrat à 500 nm fait apparaître le composé [1], alors que c'est un éclairage avec une lumière de longueur d'onde de 250 nm et une observation à 400 nm qui fait apparaître le composé [2].

Lorsque, par contre les molécules utilisées sont celles des composés [3] et [4], c'est-à-dire le cis-4-4'-diméthylstilbène et le p-diméthylaminobenzylidèneamalonitrile, la mise en évidence des chocs reçus par le substrat est obtenue en éclairant ledit substrat par un rayonnement de longueur d'onde de 285 nm et en observant à 425 nm pour sélectionner la fluorescence émise par le composé [3], alors qu'un éclairage à 400 nm et une observation à 525 nm fait apparaître la fluorescence émise par le composé [4].

L'invention n'est pas limitée, bien entendu, aux exemples exposés ci-dessus.

Ainsi, pour augmenter le décalage des spectres des produits utilisés et faciliter d'autant l'observation, peut-on faire appel à des molécules ayant un rendement de phosphorescence élevé, entraînant un déplacement du spectre d'émission vers les grandes longueurs d'ondes comme par exemple des dérivés halogénés dont la présence augmente le rendement de phosphorescence au détriment de la fluorescence.

## Revendications

1. Procédé de mise en évidence d'un ou de chocs reçus par un substrat ou une structure, au moyen d'une matière déposée sur le substrat ou la structure et comprenant une matrice dans laquelle sont incluses des microcapsules prévues pour être brisées lors d'un choc et libérer un ou des produits photoluminescents, caractérisé en ce qu'il consiste à associer dans les microcapsules ces produits à un solvant pour former un mélange ayant une photoluminescence faible ou quasi-nulle, la photoluminescence desdits produits apparaissant lorsque les microcapsules sont brisées et que le solvant est libéré et dispersé ou évaporé dans la matrice.

2. Procédé selon la revendication 1, caractérisé en ce que la photoluminescence est une fluorescence.

3. Procédé selon la revendication 1 ou la revendication 2, caractérisé en ce que le ou les produits précités comprennent des molécules organiques du type "rotateur libre" dans un solvant, c'est-à-dire des molécules ayant une fluorescence très faible ou pratiquement nulle en solution liquide, et présentant un rendement de fluorescence important lorsqu'elles sont "piégées" dans une matrice solide où leurs mouvements de rotation sont fortement gênés.

4. Procédé selon l'une quelconque des revendications précédentes, caractérisé en ce que le ou les produits sont choisis parmi les di et triphénylméthanes, les dérivés du stilbène et les malonitriles.

5. Procédé selon la revendication 4, caractérisé en ce que les produits sont choisis parmi la tétraméthyldiaminodiphénylkétone (Michler's cetone), la tétraméthyldiaminophénylkéthoimine hypochloride, (dite auramine O), l'acide fuschin, le crystal-violet, l'éthyl violet, le malachite green, le victoria blue, le patent blue, l'éthyl green, le wool green, le cis-stilbène, le trans-$\alpha$-méthylstilbène, le trans-$\alpha$-$\alpha'$-diméthylstilbène, le trans-2,4,6-triméthylstilbène, le triphényléthylène, le tétraphényléthylène.

6. Procédé selon la revendication 3 et l'une quelconque des revendications 4 à 5, caractérisé en ce que le solvant est choisi notamment parmi le chloroforme, le tétrachlorure de carbone, le trichloréthylène, le dichloréthane, le xylène, le cyclohexane, les alcools, les acétones et les acétates.

7. Procédé selon l'une quelconque des revendications précédentes, caractérisé en ce que la matrice est un milieu du type peinture ou vernis à base de résine polyuréthanne mono ou bi-composants, de résine

époxy mono ou bi-composants, de résine acrylique, styrénique et/ou glycérophtalique.

8. Procédé selon l'une quelconque des revendications précédentes, caractérisé en ce que la coque ou enveloppe des microcapsules est à base de matière plastique du type polyamide.

9. Procédé selon la revendication 1 ou la revendication 2, caractérisé en ce que les produits enfermés dans les microcapsules forment un système à inhibition "dynamique" de la fluorescence, c'est-à-dire dans lequel le rendement de fluorescence des molécules qui les constituent est inhibé par un ou des agents inhibiteurs qui jouent pleinement leur rôle aussi longtemps qu'ils sont présents en solution liquide avec les substances fluorescentes dans les microcapsules noyées dans la matrice alors que cette action d'inhibition n'existe plus, ou à un degré notablement moindre, après rupture des microcapsules lors de la diffusion desdits agents dans la matrice où ils s'évaporent avec le solvant ou bien sont "piégés".

10. Procédé selon la revendication 9, caractérisé en ce que les microcapsules enferment un système constitué par un fluoresceur, un inhibiteur et un solvant choisis parmi les ensembles suivants :

| Fluoresceur | inhibiteur | Solvant |
|---|---|---|
| Pérylène | CBr4 | Benzène |
| " | " | Decaline |
| Rubrène | " | Benzène |
| " | " | Cyclohexane |
| 1,2-benzanthracène | " | Huile minérale |
| Anthracène | CNSe-K+ | Méthanol |
| Anthracène | I-K+ | " |
| Pyrène | N.N.diméthylaniline | Acétonitrile |
| " | " | Diméthylformamide |
| " | " | Ethanol |
| Pyrène | Tétracyanobenzène | Acétonitrile |
| " | " | n-hexane |
| Pyrène | o-dicyanobenzène | Acétonitrile |
| " | p-dicyanobenzène | " |
| " | m-dicyanobenzène | Méthanol |
| " | α-cyanonaphtalène | " |
| " | m-dicyanobenzène | Micelle |
| Méthylpyrène | " | Micelle |
| Pérylène | N.N-diméthylamine | Acétone |
| Diéthylindolin-dole | p-cyanotoluène | Micelle |
| " | α-cyanonaphtalène | Micelle |
| $Ru(bpy)_3^{2+}$ | 1-naphtylamine | Acétonitrile |
| $Ru(bpy)_3^{2+}$ | " | Propionitrile |
| " | " | Acétone |
| " | " | Méthanol |
| " | " | Ethanol |
| " | " | 2-propanol |
| " | N,N,N',N'-tétraméthyl-p phénylènediamine | Acétonitrile |
| " | 4-aminodiphényl-amine | " |
| " | Phénothiazine | " |
| " | N,N-diméthylaniline | " |

| | | |
|---|---|---|
| " | Duroquinone | " |
| " | N,N,N',N'-tétraméthyl-1,4-benzènediamine | " |
| " | N,N,4-triméthylbenzène-diamine | " |
| " | N,N-diméthylaniline | Méthanol |
| " | N,N-diméthyl-p-toluidine | " |
| " | N,N,N',N'-tétraméthyl-p-phénylènediamine | " |

**11.** Procédé selon la revendication 1 ou la revendication 2, caractérisé en ce que les produits mis en oeuvre sont des molécules du type de celles susceptibles de subir un transfert de charge par torsion intra-moléculaire.

**12.** Procédé selon l'une quelconque des revendications précédentes, caractérisé en ce qu'il consiste à appliquer sur la surface du substrat ou structure un film ou pellicule d'une matrice du type vernis ou peinture dans laquelle sont noyées les microcapsules renfermant le ou les produits à propriété de photoluminescence, puis à provoquer le séchage ou la réticulation de la matrice, ces opérations étant suivies ultérieurement pour la mise en évidence d'un ou de chocs éventuels d'une excitation photoluminescente du film ou pellicule provoquant une réémission photoluminescente en correspondance de celles des microcapsules brisées.

**13.** Procédé selon une des revendications 1 à 12, caractérisé en ce que des microcapsules à coques de fragilités différentes enferment des produits qui, lorsqu'ils sont libérés dans la matrice, ont des caractéristiques optiques différentes.

**14.** Procédé selon la revendication 13 dans lequel la photoluminescence est une fluorescence, caractérisé en ce que les produits qu'enferment les microcapsules sont des molécules organiques dont les caractéristiques optiques diffèrent entre elles par leurs spectres d'absorption, ou d'émission, ou d'émission et d'absorption.

**15.** Procédé selon la revendication 14, caractérisé en ce que les produits microencapsulés sont le trans-α-α'-dichlorostilbène et le trans-α-α'-diméthylstilbène.

**16.** Procédé selon la revendication 14, caractérisé en ce que les produits sont des molécules organiques choisies parmi un composé de la famille du stilbène et un composé de la famille des malonitriles.

**17.** Procédé selon la revendication 16, caractérisé en ce que les molécules organiques choisies sont le cis-4-4'-diméthylstilbène et le p-diméthylaminobenzylidènemalonitrile.

**18.** Procédé selon l'une quelconque des revendications précédentes suivant lequel on applique, sur la surface du substrat ou structure un film ou pellicule du type vernis ou peinture dans laquelle sont noyées les microcapsules renfermant les produits à propriétés de photoluminescence différentes, puis on provoque le séchage ou la réticulation de la matrice, ces opérations étant suivies ultérieurement pour la mise en évidence d'un ou de chocs éventuels d'une excitation photoluminescente du film ou pellicule provoquant une réémission photoluminescente en correspondance de celles des microcapsules brisées, caractérisé en ce que l'excitation et/ou l'émission sont filtrées à une ou des longueur(s) d'onde ($\lambda_1$, $\lambda_2$, $\lambda_3$,...) prédéterminées.

**19.** Procédé selon la revendication 18, caractérisé en ce que pour un couple de molécules organiques constitué par le trans-α-α'-dichlorostilbène et le trans-α-α'-diméthylstilbène, le substrat est éclairé avec une lumière de longueur d'onde de 300 nm et l'observation conduite à 500 nm pour faire apparaître le le trans-α-α'-dichlorostilbène, tandis que l'éclairage est effectué avec une lumière de longueur d'onde de 250 nm et l'observation conduite à 400 nm pour faire apparaître le trans-α-α'-diméthylstilbène.

**20.** Procédé selon la revendication 18, caractérisé en ce que pour un couple de molécules organiques constitué par du cis-4-4′-diméthylstilbène et du p-diméthylaminobenzylidènemalonitrile, le substrat est éclairé avec un rayonnement d'une longueur d'onde de 285 nm, l'observation est conduite à 425 nm pour faire apparaître la fluorescence émise par le cis-4-4′-diméthylstilbène, alors que c'est un éclairage à 400 nm et une observation à 525 nm qui est conduite pour faire apparaître la fluorescence du p-diméthylaminobenzylidènemalonitrile.

**21.** Dispositif pour la mise en oeuvre du procédé selon l'une quelconque des revendications précédentes, comprenant un milieu propre à être rapporté sur un substrat ou structure et constitué par une matrice dans laquelle sont noyées des microcapsules prévues pour être brisées lors d'un choc et libérer des produits doués de propriétés de photoluminescence, caractérisé en ce que les produits précités sont associés dans les microcapsules à un solvant et forment avec celui-ci un mélange à photoluminescence faible ou quasi-nulle, la photoluminescence des produits apparaissant quand les microcapsules sont brisées et que le solvant est libéré et dispersé ou évaporé dans la matrice.

**22.** Dispositif selon la revendication 21, caractérisé en ce que le ou les produits encapsulés sont des molécules organiques du type "rotateur libre" ou des systèmes à transfert de charge par torsion intra-moléculaire dans un solvant.

**23.** Dispositif selon la revendication 22, caractérisé en ce que les molécules organiques du type "rotateur libre" sont celles du triphényléthylène, en ce que le solvant est constitué par du xylène et en ce que les microcapsules, d'une dimension comprise entre 20 et 40 µm, sont noyées dans une matrice formée d'une résine époxy bi-composants à réticulation par un peroxyde.

**24.** Dispositif selon la revendication 21, caractérisé en ce que les produits encapsulés forment un système à inhibition "dynamique" de la fluorescence.

**25.** Dispositif selon la revendication 24, caractérisé en ce que le système à inhibition "dynamique" de la fluorescence comporte du naphtacène en tant que fluoresceur et du tétrabromure de carbone en tant qu'inhibiteur, le solvant du système étant constitué par du cyclohexane, les microcapsules enfermant le système étant noyées dans un vernis polyuréthanne monocomposant.

**26.** Dispositif selon l'une quelconque des revendications 21 à 25, caractérisé en ce que les coques renfermant les produits doués, complémentairement, de propriétés optiques différentes, sont elles-mêmes de fragilités différentes.

## Patentansprüche

**1.** Verfahren zum Sichtbarmachen eines oder mehrerer Stöße, die von einem Substrat oder einem Gebilde aufgenommen wurden, mit Hilfe eines Materials, welches auf das Substrat oder das Gebilde aufgebracht wurde und eine Matrix aufweist, in welcher Mikrokapseln eingeschlossen sind, die dazu vorgesehen sind, bei einem Stoß aufzubrechen und ein oder mehrere photoluminiszierende Stoffe freizusetzen, **dadurch gekennzeichnet, daß** diesen Stoffen in den Mikrokapseln ein Lösungsmittel zugeordnet ist, um eine Mischung mit geringer oder verschwindender Photoluminiszenz zu bilden, wobei die Photoluminiszenz dieser Stoffe in Erscheinung tritt, nachdem die Mikrokapseln aufgebrochen sind und das Lösungsmittel in die Matrix freigesetzt und verteilt oder verflüchtigt ist.

**2.** Verfahren nach Anspruch 1, **dadurch gekennzeichnet, daß** die Photoluminiszenz eine Fluoreszenz ist.

**3.** Verfahren nach Anspruch 1 oder 2, **dadurch gekennzeichnet, daß** der oder die Stoffe organische Moleküle enthalten, die in einer Lösung "frei rotieren", daß heißt, daß diese Moleküle in flüssiger Lösung eine sehr geringe oder verschwindende Fluoreszenz besitzen und eine starke Fluoreszenzausbeute zeigen, wenn sie in einer festen Matrix eingefangen sind, wo ihre Rotationsbewegungen stark eingeschränkt sind.

**4.** Verfahren nach einem der vorigen Ansprüche, **dadurch gekennzeichnet, daß** der oder die Stoffe ausgewählt werden aus: Di- und Triphenylmethan, den Derivaten des Stilben und des Malonsäuredinitrils.

**5.** Verfahren nach Anspruch 4, **dadurch gekennzeichnet, daß** die Stoffe ausgewählt werden aus: Tetramethyldiaminodiphenylketon (Michlers Keton), Tetramethyldiaminophenylketoimin-Hypochlorid (Auramin O genannt), Fuchsinsäure, Kristallviolett, Ethylviolett, Malachitgrün, Viktoriablau, Patentblau, Ethylgrün, Wollgrün, cis-Stilben, trans-α-α'-Methylstilben, trans-α-α'-Dimethylstilben, trans-2,4,6-Trimethylstilben, Triphenylethylen, Tetraphenylethylen.

6. Verfahren nach Anspruch 3 und einem der Ansprüche 4 bis 5, **dadurch gekennzeichnet, daß** das Lösungsmittel insbesondere ausgewählt wird aus: Chloroform, Tetrachlorkohlenstoff, Trichlorethylen, Dichlorethylen, Xylol, Cyclohexan, Alkoholen, Acetonen und Acetaten.

7. Verfahren nach einem der vorigen Ansprüche, **dadurch gekennzeichnet, daß** die Matrix ein Medium in Form eines Anstrichs oder Firnisses auf Basis eines Ein- oder Zweikomponenten-Polyurethanharzes, eines Ein- oder Zweikomponenten-Epoxyharzes, eines Acryl-, Styrol- und/oder Glyzerinphtalatharzes ist.

8. Verfahren nach einem der vorigen Ansprüche, **dadurch gekennzeichnet, daß** die Schale oder die Umhüllung der Mikrokapseln auf Basis eines Kunststoffs von der Art eines Polyamids hergestellt ist.

9. Verfahren nach Anspruch 1 oder Anspruch 2, **dadurch gekennzeichnet, daß** die in den Mikrokapseln eingeschlossenen Stoffe ein dynamisches" Fluoreszenz-Inhibitorensystem bilden, das heißt, in welchem die Fluoreszenzausbeute der Moleküle, durch die es gebildet wird, durch ein oder mehrere Inhibitoren gehemmt ist, die diese Eigenschaft nur solange besitzen, wie sie in flüssiger Lösung mit den fluoreszierenden Stoffen in den Mikrokapseln vorliegen, die in der Matrix eingebettet sind, bis diese Hemmwirkung nicht mehr oder in einem geringeren Maß vorliegt, nachdem die Mikrokapseln zerstört wurden und die Lösungen in die Matrix diffundiert sind, wo sie sich mit dem Lösungsmittel verflüchtigen oder eingefangen sind.

10. Verfahren nach Anspruch 9, **dadurch gekennzeichnet, daß** die Mikrokapseln ein System umschließen, welches aus einem Fluoreszenzmittel, einem Inhibitor und einem Lösungsmittel besteht, die aus der folgenden Anordnung ausgewählt sind:

| Fluoreszenzmittel | Inhibitor | Lösungsmittel |
|---|---|---|
| Perylen | $CBr_4$ | Benzol |
| " | " | Decalin |
| Rubren | " | Benzol |
| " | " | Cyclohexan |
| 1,2-Benzanthracen | " | Mineralöl |
| Anthracen | $CNSe^-K^+$ | Methanol |
| " | $I^-K^+$ | " |
| Pyren | N,N-Dimethylanilin | Acetonitrile |
| " | " | Dimethylformamid |
| " | " | Ethanol |
| " | Tetracyanobenzol | Acetonitril |

| | | |
|---|---|---|
| " | | n-Hexan |
| " | o-Dicyanobenzol | Acetonitril |
| " | p-Dicyanobenzol | " |
| " | m-Dicyanobenzol | Methanol |
| " | α-Dicyanonaphtalen | " |
| " | m-Dicyanobenzol | Micelle |
| Methylpyren | " | " |
| Perylen | N,N-Dimethylamin | Aceton |
| Diethylindolindol | p-Cyanotoluol | Micelle |
| " | α-Cyanonaphtalen | " |
| $Ru(bpy)_3^{2+}$ | 1-Naphthylamin | Acetonitril |
| " | " | Propionitril |
| " | " | Aceton |
| " | " | Methanol |
| " | " | Ethanol |
| " | " | 2-Propanol |
| " | N,N,N',N'-Tetramethyl-p-phenylendiamin | Acetonitril |
| " | 4-Aminodiphenylamin | " |
| " | Phenothiazin | " |
| " | N,N-Dimethylanilin | " |
| " | Durochinon | " |
| " | N,N,N',N'-Tetramethyl-1,4-benzoldiamin | " |
| " | N,N,4-Trimethylbenzoldiamin | " |
| " | N,N-Dimethylanilin | Methanol |
| " | N,N-Dimethyl-p-toluidin | " |
| " | N,N,N',N'-Tetramethyl-p-phenylendiamin | " |

**11.** Verfahren nach Anspruch 1 oder 2, **dadurch gekennzeichnet, daß** die verwendeten Stoffe der Gruppe angehören, welche bei intramolekularer Torsion einem Ladungstransfer unterliegen.

**12.** Verfahren nach einem der vorigen Ansprüche, **dadurch gekennzeichnet, daß** auf der Oberfläche eines Substrates oder eines Gebildes eine Schicht oder einen Film einer Matrix in Form eines Firnisses oder Anstrichs aufgebracht wird, in welcher die Mikrokapseln eingebettet sind, welche den oder die Stoffe mit den photoluminiszierenden Eigenschaften umschließen, und danach ein Trocknen oder Vernetzen der Matrix erfolgt, wobei diesen Arbeitsschritten abschließend zum Sichtbarmachen eines oder mehrerer Stöße eine Photoluminiszenzanregung der Schicht oder des Films nachfolgt, welche eine Photoluminsizenzemission entsprechend den aufgebrochenen Mikrokapseln verursacht.

**13.** Verfahren nach einem der Ansprüche 1 bis 12, **dadurch gekennzeichnet, daß** die Stoffe von Mikrokapseln unterschiedlicher Brüchigkeit umschlossen sind, wobei die Stoffe nach ihrem Freisetzen in die Matrix unterschiedliche optische Eigenschaften besitzen.

14. Verfahren nach Anspruch 13, bei welchem die Photoluminiszenz eine Fluoreszenz ist, **dadurch gekennzeichnet, daß** die in den Mikrokapseln eingeschlossenen Stoffe organische Moleküle sind, deren optische Eigenschaften sich in ihren Absorptions- oder Emissionsspektren oder Emissions- und Absorptionsspektren unterscheiden.

15. Verfahren nach Anspruch 14, **dadurch gekennzeichnet, daß** die in den Mikrokapseln enthaltenen Stoffe trans-α-α′-Dichlorstilben und trans-α-α′-Dimethylstilben sind.

16. Verfahren nach Anspruch 14, **dadurch gekennzeichnet, daß** die Stoffe organische Moleküle sind, die ausgewählt werden aus: einer Zusammensetzung aus der Familie der Stilbene und einer Zusammensetzung aus der Familie der Malonitrilen.

17. Verfahren nach Anspruch 16, **dadurch gekennzeichnet, daß** die ausgewählten organischen Moleküle cis-4-4′-Dimethylstilben und p-Dimethylaminobenzylidenmalonitril sind.

18. Verfahren nach einem der vorigen Ansprüche, bei welchen an der Oberfläche des Substrats oder des Gebildes eine Schicht oder ein Film in Form eines Firnisses oder Anstrichs aufgebracht wird, in welchen Mikrokapseln eingebettet sind, die Stoffe mit unterschiedlichen photoluminiszierenden Eigenschaften umschließen, wonach ein Trocknen oder Vernetzen der Matrix erfolgt, wobei diesen Arbeitsschritten abschließend zum Sichtbarmachen eines oder mehrerer Stöße eine Photoluminiszenzanregung der Schicht oder des Films nachfolgt, welche entsprechend der aufgebrochenen Mikrokapseln eine Photoluminiszenzemission verursacht, **dadurch gekennzeichnet, daß** die Anregung und/oder die Emission bei einer oder mehreren vorgegebenen Wellenlängen ($\lambda_1$, $\lambda_2$,$\lambda_3$, ...) gefiltert werden.

19. Verfahren nach Anspruch 18, **dadurch gekennzeichnet, daß** das Substrat für ein Paar organischer Moleküle, die durch trans-α-α′-Dichlorstilben und trans-α-α′-Dimethylstilben gebildet werden, mit Licht bei einer Wellenlänge von 300 nm bestrahlt und die Beobachtung bei 500 nm durchgeführt wird, um trans-α-α′-Dichlorstilben sichtbar zu machen, und mit Licht bei einer Wellenlänge von 250 nm bestrahlt und die Beobachtung bei 400 nm durchgeführt wird, um trans-α,α′-Dimethylstilben sichtbar zu machen.

20. Verfahren nach Anspruch 18, **dadurch gekennzeichnet, daß** das Substrat für ein Paar organischer Moleküle, die durch cis-4-4′-Dimethylstilben und p-Dimethylaminobenzylidenmalonitril gebildet werden, mit Licht bei einer Wellenlänge von 285 nm bestrahlt und die Beobachtung bei 425 nm durchgeführt wird, um cis-4-4′-Dimethylstilben sichtbar zu machen, und mit Licht bei einer Wellenlänge von 400 nm bestrahlt und die Beobachtung bei 525 nm durchgeführt wird, um p-Dimethylaminobenzylidenmalonitril sichtbar zu machen.

21. Vorrichtung zum Durchführen des Verfahrens nach einem der vorigen Ansprüche, die ein Medium aufweist, welches dazu geeignet ist, auf ein Substrat oder ein Gebilde aufgebracht zu werden und durch eine Matrix gebildet wird, in welcher Mikrokapseln eingebettet sind, die dazu vorgesehen sind, nach einem Stoß aufzubrechen und Stoffe mit photoluminisperenden Eigenschaften freizusetzen, **dadurch gekennzeichnet, daß** die Stoffe in den Mikrokapseln einem Lösungsmittel zugeordnet sind und mit diesem eine Mischung mit geringer oder verschwindender Photoluminiszenz bilden, wobei die Photoluminiszenz der Stoffe in Erscheinung tritt, wenn die Mikrokapseln aufgebrochen sind und das Lösungsmittel in der Matrix freigesetzt und verteilt oder verflüchtigt ist.

22. Vorrichtung nach Anspruch 21, **dadurch gekennzeichnet, daß** die eingeschlossenen Stoffe organische Stoffe aus der Gruppe mit "freier Rotation" oder Systeme mit Ladungstransfer bei intramolekularer Torsion in einer Lösung sind.

23. Vorrichtung nach Anspruch 22, **dadurch gekennzeichnet, daß** der oder die eingeschlossenen organischen Stoffe mit "freier Rotation" Triphenylethylene sind, daß das Lösungsmittel durch Xylol gebildet wird und daß die Mikrokapseln, die eine Abmessung zwischen 20 und 40 µm besitzen, in einer Matrix eingebettet sind, die durch ein Zweikomponenten-Epoxyharz gebildet wird, welches mit einem Peroxid vernetzt ist.

24. Vorrichtung nach Anspruch 21, **dadurch gekennzeichnet**, **daß** die eingeschlossenen Stoffe ein "dynamisches" Fluoreszenzinhibitionssystem bilden.

25. Vorrichtung nach Anspruch 24, **dadurch gekennzeichnet**, **daß** das "dynamische" Fluoreszenzinhibitionssystem Naphthacen als Fluoreszenzmittel und Tretrabromkohlenstoff als Inhibitor enthält, wobei das Lösungsmittel des Systems durch Cyclohexan gebildet wird und die das System umschließenden Mikrokapseln in einem Einkomponentenpolyurethan-Firnis eingebettet sind.

26. Vorrichtung nach einem der Ansprüche 21 bis 25, **dadurch gekennzeichnet**, **daß** die Schalen, welche die wirksamen Stoffe umschließen, komplementär zu den unterschiedlichen optischen Eigenschaften ebenso eine unterschiedliche Brüchigkeit aufweisen.

## Claims

1. A process for revealing impact(s) received by a substrate or a structure by means of material deposited on the substrate or the structure and comprising a matrix in which there are included microcapsules intented to be broken during impact and to release photoluminescent product(s), the process being characterized in that it associates theses products in the microcapsules with a solvent to form a mixture having little or almost non-existent photoluminescence, the photoluminescence of said products appearing when the microcapsules have been broken, and the solvent is released and has dispersed or evaporated into the matrix.

2. The process as claimed in claim 1, characterized in that the photoluminescence is a fluorescence.

3. The process as claimed in claim 1 or claim 2, characterized in that the above-mentioned product(s) comprise organic molecules of the "free rotator" type in a solvent, that is to say molecules which have a fluorescence which is very weak or practically nil in liquid solution, and exhibit a high fluorescence yield when they are "trapped" in a solid matrix where their rotational motion is greatly hindered.

4. The process as claimed in any one of the preceding claims, characterized in that the product(s) is (are) chosen from di- and triphenylmethanes, stilbene derivatives and malononitriles.

5. The process as claimed in claim 4, characterized in that products are chosen from tetramethyldiaminodiphenyl ketone (Michler's ketone), tetramethyldiaminophenylketimine hydrochloride (known as Auramine O), Fuchsin Acid, Crystal Violet, Ethyl Violet, Malachite Green, Victoria Blue, Patent Blue, Ethyl Green, Wool Green, cis-stilbene, trans-$\alpha$-methylstilbene, trans-$\alpha,\alpha'$-dimethylstilbene, trans-2,4,6-trimethylstilbene, triphenylethylene and tetraphenylethylene.

6. The process as claimed in claim 3 and either of claims 4 and 5, characterized in that the solvent is chosen especially from chloroform, carbon tetrachloride, trichloroethylene, dichloroethane, xylene, cyclohexane, alcohols, acetones and acetates.

7. The process as claimed in any one of the preceding claims, characterized in that the matrix is a medium of the paint or varnish type based on a single- or two-component polyurethane resin, one- or two-component epoxy resin, or acrylic, styrene and/or glycerophthalic resin.

8. The process as claimed in any one of the preceding claims, characterized in that the shell or coat of the microcapsule is based on plastic of the polyamide type.

9. The process as claimed in claim 1 or claim 2, charaterized in that the products enclosed in the microcapsules form a system of "dynamic" inhibition of fluorescence, that is to say in which the fluorescence yield of the molecules of which they consist is inhibited by inhibitor agent(s) which act as such to the full as long as they are present in liquid solution with the fluorescent substances in the molecules embedded in the matrix, whereas this inhibiting action no longer exists, or exists to a markedly lesser degree, after rupture of the microcapsules when the said agents diffuse into the matrix, where they evaporate off with the solvent or else are "trapped".

10. The process as claimed in claim 9, characterized in that the microcapsules enclose a system consisting

of a fluorescer, an inhibitor and a solvent which are chosen from the following combinations:

| Flourescer | Inhibitor | Solvent |
|---|---|---|
| Perylene | $CBr_4$ | Benzene |
| " | " | Decalin |
| Rubrene | " | Benzene |
| " | " | Cyclohexane |
| 1,2-Benzanthracene | " | Mineral oil |

| | | |
|---|---|---|
| Anthracene | $K^{+}CNSe^{-}$ | Methanol |
| Anthracene | $K^{+}I^{-}$ | " |
| Pyrene | N,N-Dimethylaniline | Acetonitrile |
| " | " | Dimethylformamide |
| " | " | Ethanol |
| Pyrene | Tetracyanobenzene | Acetonitrile |
| " | " | n-Hexane |
| " | o-Dicyanobenzene | Acetonitrile |
| Pyrene | p-Dicyanobenzene | Acetonitrile |
| " | m-Dicyanobenzene | Methanol |
| " | α-Cyanonaphthalene | " |
| " | m-Dicyanobenzene | Micelle |
| Methylpyrene | " | Micelle |
| Perylene | N,N-Dimethylamine | Acetone |
| Diethylindolindole | p-Cyanotoluene | Micelle |
| " | α-Cyanonaphthalene | Micelle |
| $Ru(bpy)_3^{2+}$ | 1-Naphthylamine | Acetonitrile |
| $Ru(bpy)_3^{2+}$ | " | Propionitrile |
| " | " | Acetone |
| " | " | Methanol |
| " | " | Ethanol |
| " | " | 2-Propanol |
| " | N,N,N',N'-Tetramethyl-p-phenylenediamine | Acetonitrile |
| " | 4-aminodiphenyl-amine | " |
| " | Phenothiazine | " |
| " | N,N-Dimethylaniline | " |
| " | Duroquinone | " |
| " | N,N,N',N'-Tetramethyl-1,4-benzenediamine | " |
| " | N,N,4-Trimethylbenzene-diamine | " |
| " | N,N-Dimethylaniline | Methanol |
| " | N,N-Dimethyl-p-toluidine | " |
| " | N,N,N',N'-Tetramethyl--p-phenylenediamine | " |

11. The process as claimed in claim 1 or claim 2, characterized in that the products used are molecules of the type capable of undergoing a charge transfer by intramolecular torsion.

12. The process as claimed in any one of the preceding claims, characterized in that it consists in applying onto the surface of the substrate or structure a film or thin skin of a matrix of the varnish or paint type in which are embedded the microcapsules enclosing the product(s) with a photoluminescence property, and in then causing the matrix to dry or crosslink, these operations being subsequently followed, in order to reveal possible impact(s), by a photoluminescent excitation of the film or thin skin causing a photoluminescent reemission corresponding to those of the broken microcapsules.

13. The process as claimed in any one of claims 1 to 12, characterized in that microcapsules with shells of different fragilities enclose products which have different optical characteristics when they are released into the matrix.

14. The process as claimed in claim 13, in which the photoluminescence is a fluorescence, characterized in that the products which the microcapsules enclose are organic molecules whose optical characteristics differ from each other in their absorption or emission or emission and absorption spectra.

15. The process as claimed in claimed in claim 14, characterized in that microencaps ulated products are trans-$\alpha,\alpha'$-dichlorostilbene and trans-$\alpha,\alpha'$-dimethylstilbene.

16. The process as claimed in claim 14, characterized in that the products are organic molecules chosen from a compound from the stilbene class and a compound from the malononitrile class.

17. The process as claimed in claim 16, characterized in that the organic molecules chosen are cis-4-4'-dimethylstilbene and p-dimethylaminobenzylidenemalononitrile.

18. The process as claimed in any one of the preceding claims, which consists in applying onto the surface of the substrate or structure a film or thin skin of the varnish or paint type in which are embedded the microcapsule enclosing the products with different photoluminescence properties, and in then causing the matrix to dry or crosslink, these operations being subsequently followed, in order to reveal possible impact(s), by a photoluminescent excitation of the film or thin skin causing a photoluminescent reemission corresponding to those of the broken microcapsules, wherein the excitation and/or the emission are filtered at one or more predetermined wavelengths ($\lambda_1$, $\lambda_2$, $\lambda_3$, etc).

19. The process as claimed in claim 18, characterized in that in the case of a pair of organic molecules consisting of trans-$\alpha,\alpha'$-dichlorostilbene and trans-$\alpha,\alpha'$-dimethylstilbene, the substrate is illuminated with a light of 300 nm wavelength and the observation conducted at 500 nm to disclose trans-$\alpha,\alpha'$-dichlorostilbene, whereas the illumination is performed with a light of 250 nm wavelength and the observation conducted at 400 nm to disclose trans-$\alpha,\alpha'$-dimethylstilbene.

20. The process as claimed in claim 18, characterized in that in the case of a pair of organic molecules consisting of cis-4,4'-dimethylstilbene and p-dimethylaminobenzylidenemalononitrile, the substrate is illuminated with a radiation of 285 nm wavelength, the observation is conducted at 425 nm to disclose the fluorescence emitted by cis-4,4'-dimethylstilbene, whereas it is an illumination at 400 nm and an observation at 525 nm which are conducted to disclose the fluorescence of p-dimethylaminobenzylidenemalononitrile.

21. A device for implementing the process as claimed in any one of the preceding claims, comprising a medium capable of being added onto a substrate or structure and constituted by a matrix in which are embedded microcapsules intended to be broken during impact and to release products which they enclose and which are endowed with photoluminescence properties, the process being characterized in that the above-mentioned products are associated in the microcapsules with a solvent and form therewith a mixture having little or almost non-existent photoluminescence, the photoluminescence of the products appearing when the microcapsules have been broken, and the solvent is released and has dispersed or evaporated into the matix.

22. The device as claimed in claim 21, characterized in that the encapsulated product(s) is (are) organic molecules of the "free rotator" type or systems with charge transfer by intramolecular torsion in a solvent.

**23.** The device as claimed in claim 22, characterized in that the organic molecules of the "free rotator" type are those of triphenylethylene, the solvent consists of xylene and the microcapsules, between 20 and 40 μm in size, are embedded in a matrix made up of a two-component epoxy resin for crosslinking with a peroxide.

**24.** The device as claimed in claim 21, characterized in that the encapsulated products form a system for "dynamic" inhibition of fluorescence.

**25.** The device as claimed in claim 24, characterized in that the system for "dynamic" inhibition of fluorescence comprises naphthacene as fluorescer and carbon tetrabromide as inhibitor, the solvent of the system consisting of cyclohexane, and the microcapsules enclosing the system being embedded in a one-component polyurethane varnish.

**26.** The device as claimed in any one of claims 21 to 25, characterized in that the shells enclosing the products additionally endowed with different optical properties are themselves of different fragilities.

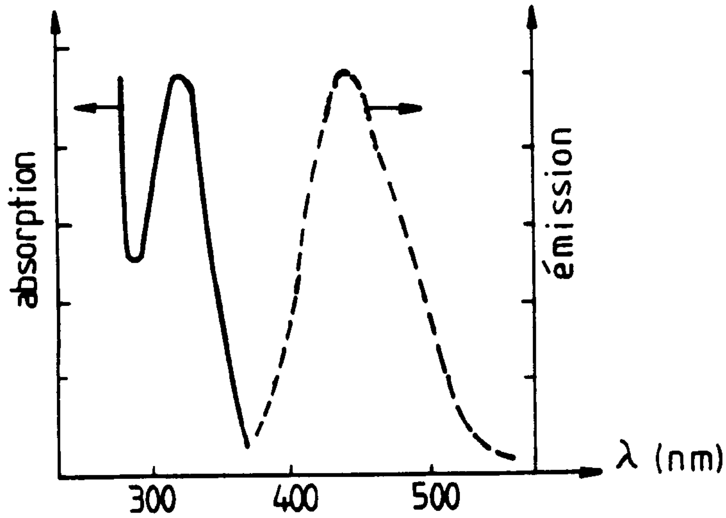


FIG.1

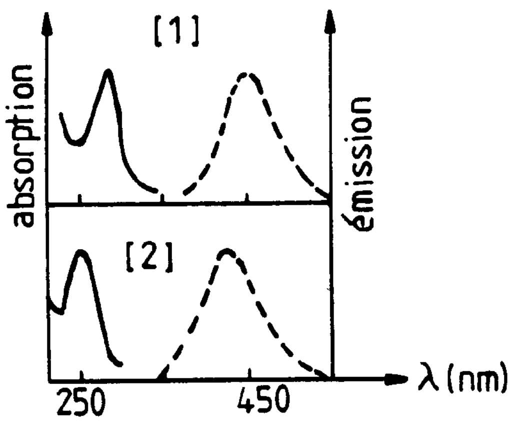


FIG.2

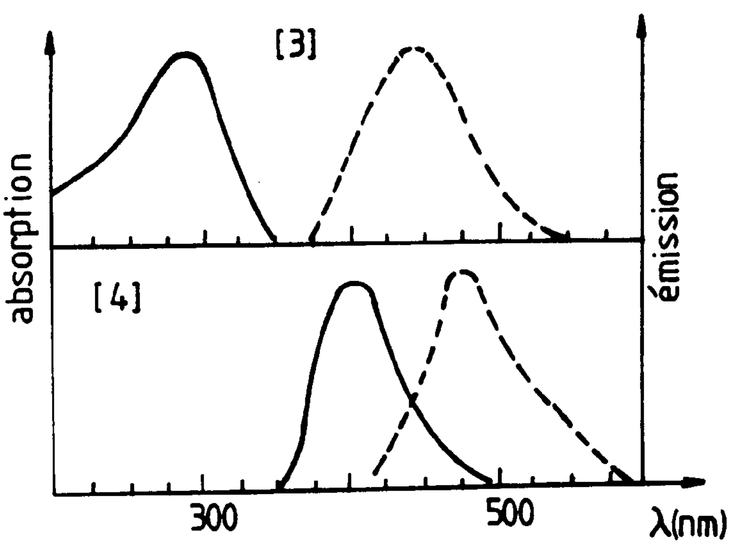


FIG.3